# EUROPEAN PATENT SPECIFICATION

(11) **EP 3 539 854 B1**
(45) Date of publication and mention of the grant of the patent: **23.06.2021**
(21) Application number: 19159858.0
(22) Date of filing: 28.02.2019
(51) Int. Cl.: B62J 15/00

(54) **REAR BRAKE HOSE LAYOUT STRUCTURE FOR SADDLE RIDING VEHICLE**
HINTERRADBREMSSCHLAUCHLAYOUTSTRUKTUR FÜR SATTELFAHRZEUG
STRUCTURE D'AGENCEMENT DE TUYAU DE FREIN ARRIÈRE POUR VÉHICULE À ENFOURCHER

(30) Priority: 15.03.2018 JP 2018047513
(43) Date of publication of application: 18.09.2019
(73) Proprietor: Honda Motor Co., Ltd., Tokyo 107-8556 (JP)
(72) Inventor: TSUDA, Tsuyoshi, Wako-shi, Saitama 351-0193 (JP)
(74) Representative: Weickmann & Weickmann PartmbB

(56) References cited:
- EP-A1- 3 141 464
- EP-A2- 2 540 603
- CN-A- 104 843 129
- JP-A- H03 253 486
- JP-A- 2000 344 170
- JP-A- 2003 072 623
- JP-A- 2009 067 133

## Description

### [Technical Field]

The present invention relates to a rear brake hose layout structure for a saddle riding vehicle.

### [Background Art]

Rear brake devices for motorcycles include a brake pedal disposed on the right side in a transverse direction of a vehicle body frame. A brake hose extends from a master cylinder coupled to the brake pedal to a rear end portion of a swing arm that supports a rear wheel, where the brake hose is coupled to a brake caliper.

It has been desirable on motorcycles to protect a brake hose for a rear wheel brake system from pebbles caused to jump off the ground by the rear wheel as a drive wheel. It has also been desirable to improve the appearance of a swing arm and its periphery where the brake hose is disposed, thereby improving the appearance of the motorcycles.

For example, as disclosed in JP 2006-21628 A, a brake hose passage interconnecting a master cylinder coupled to a brake pedal and a caliper extends forwardly of the pivoted portion of a swing arm.

EP 2 540 603 A2 discloses a rear brake hose layout structure according to the preamble of claim 1.

In JP H03 253486 A, a forward extension of the fender overlaps the brake hose as viewed in side elevation.

### [Summary of the Invention]

### [Problem to be Solved by the Invention]

JP 2006-21628 A discloses that a brake hose is disposed on a swing arm and has a large part exposed to the tread of a rear wheel as viewed in a side elevation of the vehicle.

Therefore, it is desirable to protect the brake hose from jumping pebbles while the vehicle is traveling and also to improve the appearance of the vehicle.

In view of the conventional shortcomings described above, it is an object of the present invention to provide a rear brake hose layout structure that protects a brake hose on a saddle riding vehicle and improves the appearance of the vehicle.

### [Means for Solving the Problem]

According to the present invention, there is provided a rear brake hose layout structure for a saddle riding vehicle according to claim 1.

In the above invention, the rear brake hose layout structure may further include a suspension (27) having a lower end (27a) connected to a central rear portion (12f) of the intermediate portion (12b) of the swing arm (12). The swing arm (12) may include a side wall (12e) disposed on a side of the intermediate portion (12b) and extending upwardly, and the brake hose (40) may lie between the suspension (27) and the side wall (12e).

In the above invention, the fender (31) has a recess (31c), a gap (50) which does not overlap the swing arm (12) in a view from above is defined rearwardly of the intermediate portion (12b) of the swing arm (12), and the brake hose (40) extends through the gap (50) and may be disposed inwardly of the arm body (12a).

In the above invention, the swing arm (12) may have a bent portion (12d) on a junction, which faces the rear wheel (3), between the intermediate portion (12b) and the arm body (12a), and the inner fender (31) may be disposed above and cover a portion of the brake hose (40) that is disposed along the bent portion (12d).

In the above invention, the portion of the brake hose (40) that is disposed along the bent portion (12d) may include at least a portion constructed as a metal pipe (46), and the brake hose (40) may include a combination of the metal pipe (46) and a hose (41, 44, 48) .

In the above invention, the rear brake hose layout structure may further include a protective member (52) disposed between the portion of the brake hose (40) that is disposed along the bent portion (12d) and the rear wheel (3).

In the above invention, the brake hose (40) may have a joint (45) interconnecting the hose (41, 44, 48) and the metal pipe (46), and the joint (45) may be offset rearwardly from a maximum-diameter portion (27b) of the suspension (27).

### [Effects of the Invention]

With the arrangement of claim 1, the fender blocks jumping pebbles ahead of the intermediate portion of the swing arm, protecting the brake hose over the upper surface of the intermediate portion from pebbles. Since the forward extension of the inner fender conceals the brake hose as viewed in side elevation, the appearance of the vehicle is improved.

Preferably, the rear brake hose layout structure includes a suspension having a lower end connected to a central rear portion of the intermediate portion of the swing arm, the swing arm including a linear protruding portion disposed on a side of the intermediate portion and extending longitudinally of the vehicle, the brake hose lying between the suspension and the linear protruding portion. Thus, the brake hose is concealed by the linear protruding portion and is less visible sideways with respect to the vehicle. As the brake hose lies between the suspension and the linear protruding portion, the brake hose can be disposed in a position that is less visible. The layout of the brake hose does not adversely affect the behavior of the suspension.

Preferably, the swing arm has a bent portion on a junction, which faces the rear wheel, between the intermediate portion and the arm body, and the fender is disposed above and covers a portion of the brake hose that is disposed along the bent portion. Therefore, the fender conceals the brake hose disposed along the bent portion, thereby improving the appearance of the vehicle.

Preferably, the portion of the brake hose that is disposed along the bent portion includes at least a portion constructed as a metal pipe, and the brake hose includes a combination of the metal pipe and a hose. Thus, the brake hose can be placed in a small space, using the metal pipe that is smaller in outside diameter than hoses and has a smaller allowable bending radius than the hoses. The freedom with which to lay the brake hose in position is increased, and the appearance of the vehicle is improved by concealing the brake hose.

Preferably, the rear brake hose layout structure further includes a protective member disposed between the portion of the brake hose that is disposed along the bent portion and the rear wheel. Thus, the protective member thus disposed protects the portion of the brake hose disposed along the bent portion. The appearance of the vehicle is thus improved by placing the brake hose along the bent portion and hence concealing and protecting the brake hose.

Preferably, the brake hose has a joint interconnecting the hose and the metal pipe, and the joint is offset rearwardly from a maximum-diameter portion of the suspension. Thus, the joint reliably holds the metal pipe, and is held out of contact with the suspension. Therefore, the joint does not adversely affect the behavior of the suspension. The brake hose that is placed over the upper surface of the swing arm is less visible from outside of the vehicle, thereby improving the appearance of the vehicle.

### [Brief Description of the Drawings]

FIG. 1 is a right side view of a motorcycle according to an embodiment of the present invention.
FIG. 2 is a fragmentary right side view illustrating an inner fender mount portion of a swing arm.
FIG. 3 is a view from above with a partly cross section, illustrating a suspension mount portion of the swing arm.
FIG. 4 is a fragmentary perspective view, partly cross section, illustrating the shape of an upper surface of the swing arm.
FIG. 5 is a fragmentary perspective view illustrating the layout of a brake hose on a bent portion of the swing arm.
FIG. 6 is a perspective view illustrating the connected configuration of the brake hose.

### [Mode for Carrying out the Invention]

A rear brake hose layout structure according to an embodiment of the present invention will hereinafter be described with reference to the drawings. In the description that follows, directions such as forward, rearward, leftward, rightward, upward, and downward directions and other directional expressions shall be in accord with those with respect to a vehicle body unless specified otherwise. In the drawings, the reference symbols FR represent a forward direction, UP an upward direction, and LH a leftward direction.

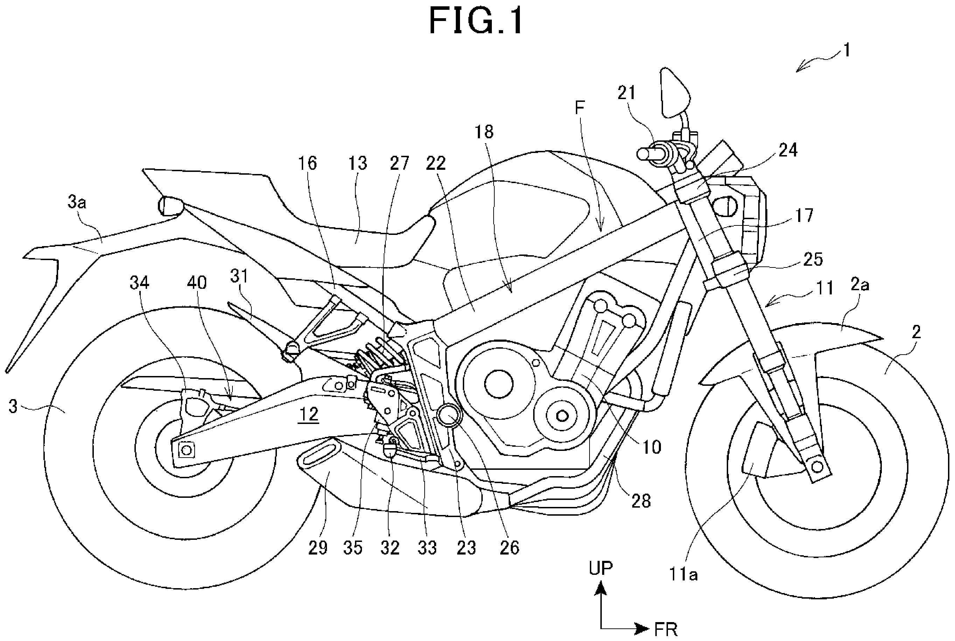

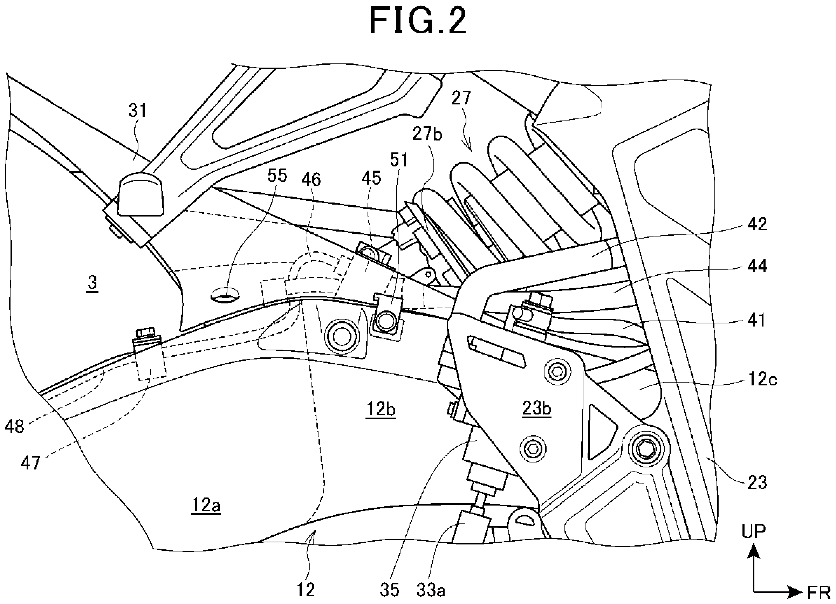

FIG. 1 is a right side elevational view of a motorcycle 1 according to an embodiment of the present invention. FIG. 2 is a fragmentary right side elevational view illustrating an inner fender mount portion of a swing arm. Of all components of the motorcycle 1 that are available in pairs of left and right components, only those disposed on the right side of the motorcycle, together with reference symbols representing them, are illustrated in FIG. 1.

As illustrated in FIG. 1, the motorcycle 1 includes an engine 10 as a power unit supported on a vehicle body frame F and a front wheel 2 and a rear wheel 3 that are disposed respectively in front and rear positions.

The front wheel 2 is supported on a front fork 11 steerably supported on a front end of the vehicle body frame F. The rear wheel 3 is supported on a swing arm 12 disposed on a rear portion of the vehicle body frame F. The motorcycle 1 is a saddle riding vehicle that includes a seat 13 that the rider sits astride. The seat 13 is disposed on an upper surface of the rear portion of the vehicle body frame F.

The vehicle body frame F includes a pair of left and right main frames 18 that support the engine 10 in the form of an internal combustion engine, and a rear frame 16 extending rearwardly from the main frames 18.

A head pipe 17 is connected to front ends of the main frames 18.

The main frames 18 include a pair of left and right main tubes 22 extending rearwardly and downwardly from a rear surface of the head pipe 17, and a pair of left and right pivot frames 23 extending downwardly from rear ends of the main tubes 22.

The main tubes 22 that extend rearwardly and downwardly have respective front end portions that are spaced from each other by a larger distance transversely across the vehicle body frame F and respective rear end portions that are spaced from each other by a smaller distance transversely across the vehicle body frame F.

The pivot frames 23 are connected to each other by a cross member, not depicted, that extends transversely across the vehicle body frame F.

The front fork 11 is supported by a steering shaft, not depicted, pivotally supported by the head pipe 17, a top bridge 24 fixed to an upper end of the steering shaft, and a bottom bridge 25 fixed to a lower end of the steering shaft.

The front wheel 2 is rotatably supported on a lower end portion of the front fork 11. A handle 21 that is used by the rider to steer the front wheel 2 is mounted on the top bridge 24.

The swing arm 12 extends rearwardly from the main frames 18 has a front end portion pivotally supported on a pivot shaft 26 disposed on the pivot frames 23 and extending transversely across the vehicle body frame F. The swing arm 12 is vertically swingable about the pivot shaft 26.

The rear wheel 3 is rotatably supported on a rear end portion of the swing arm 12. A suspension 27 as a damper device is disposed between and coupled to the swing arm 12 and the main frames 18.

The engine 10 is supported on the main frames 18. Output power from the engine 10 is available from an output shaft thereof that projects on the left side of the motorcycle 1, and is transmitted to the rear wheel 3 by a chain, not depicted, that is trained around a sprocket on the output shaft of the engine 10 and a sprocket on the rear wheel 3.

The engine 10 includes an exhaust pipe 28 extending forwardly from an exhaust port on a front surface of the engine 10, then extends transversely to one side, i.e., the right side, of the motorcycle 1, and then extends rearwardly. The exhaust pipe 28 has a rear end connected to a muffler 29.

A pair of steps 32 are disposed respectively on the left and right sides of the motorcycle 1 below the pivot frames 23. A shift pedal, not depicted, is disposed in the vicinity of the step 32 on the left side of the motorcycle 1. A brake pedal 33 is disposed in the vicinity of the step 32 on the right side of the motorcycle 1.

The motorcycle 1 includes a front fender 2a mounted on the front fork 11 in covering relation to an upper portion of the front wheel 2, and a rear fender 3a extending in overhanging relation to the rear wheel 3.

An inner fender 31 that covers an upper portion of the rear wheel 3 is mounted on the swing arm 12 below the rear fender 3a.

A brake caliper 11a is mounted on the front fork 11 for braking the front wheel 2 in response to operation of a brake lever, not depicted, mounted on the handle 21.

A brake caliper 34 is mounted on a rear portion of the swing arm 12 disposed on the right side of the motorcycle 1 for braking the rear wheel 3 in response to operation of the brake pedal 33.

As illustrated in FIG. 2, a master cylinder 35 is connected to the brake pedal 33 through a link rod 33a. The master cylinder 35 is connected to the brake caliper 34 for braking the rear wheel 3 by a brake hose 40.

The master cylinder 35 is mounted on a plate 23b that is mounted on the right pivot frame 23. The master cylinder 35 has an upper portion inclined forwardly and is connected to a hose 41 of the brake hose 40 and a reservoir hose 42.

The hose 41 is connected to an upper end portion of the master cylinder 35. When the brake pedal 33 is operated, the master cylinder 35 transmits hydraulic pressure through the hose 41 to working oil in the brake hose 40, transmitting the operation of the brake pedal 33 to the brake caliper 34.

The reservoir hose 42 is connected to a vertically intermediate portion of the master cylinder 35, which is connected to an oil reservoir, not depicted, through the reservoir hose 42. The master cylinder 35 is replenished with working oil from the oil reservoir through the reservoir hose 42.

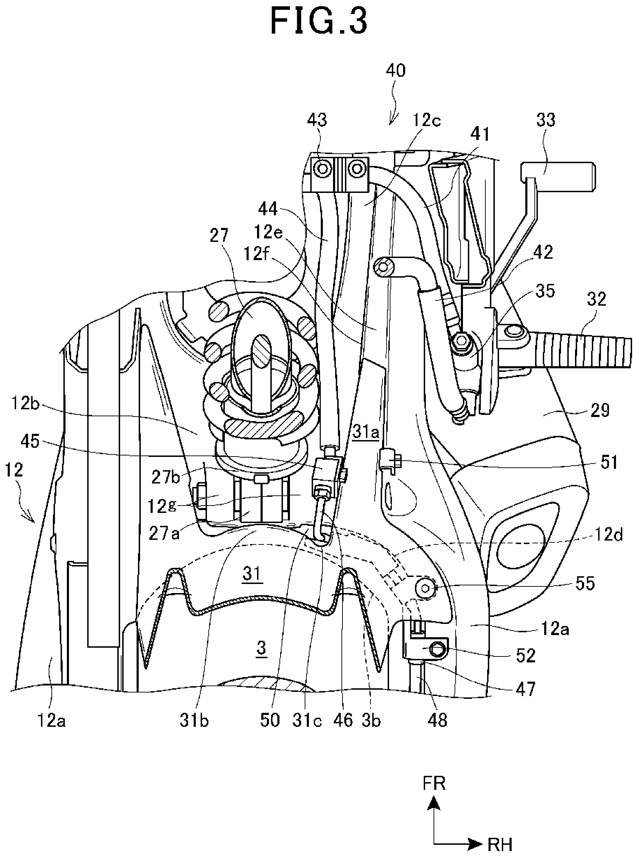

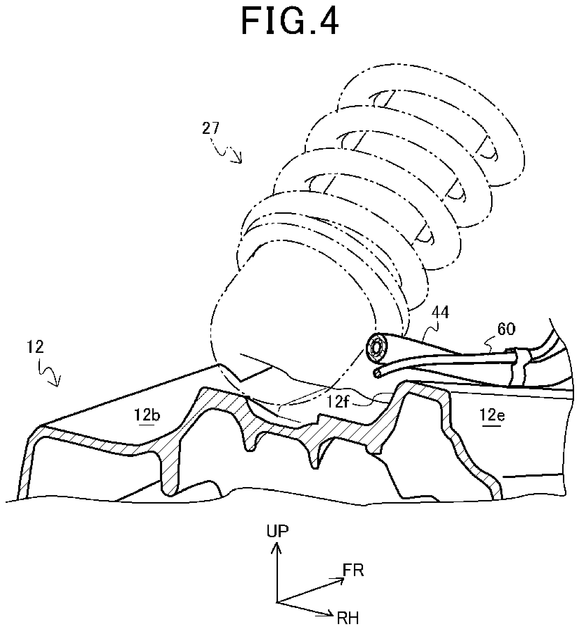

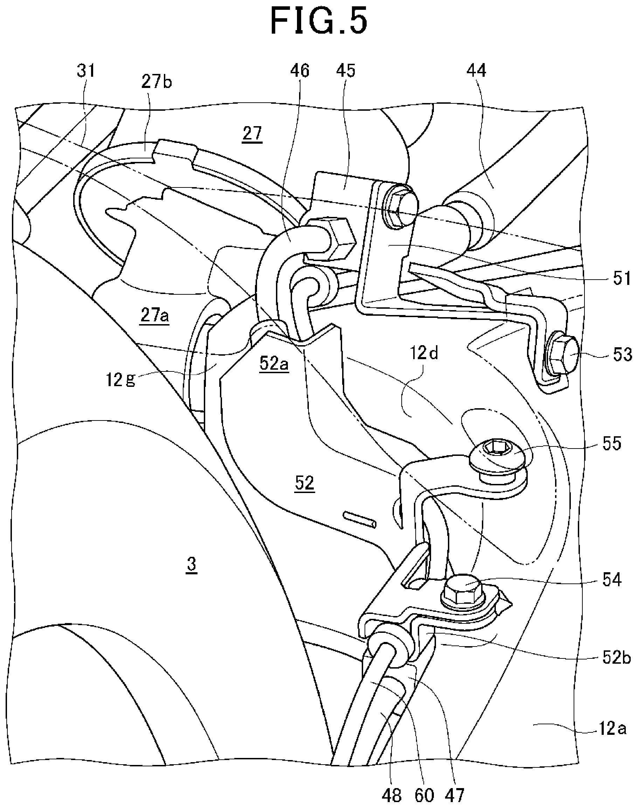

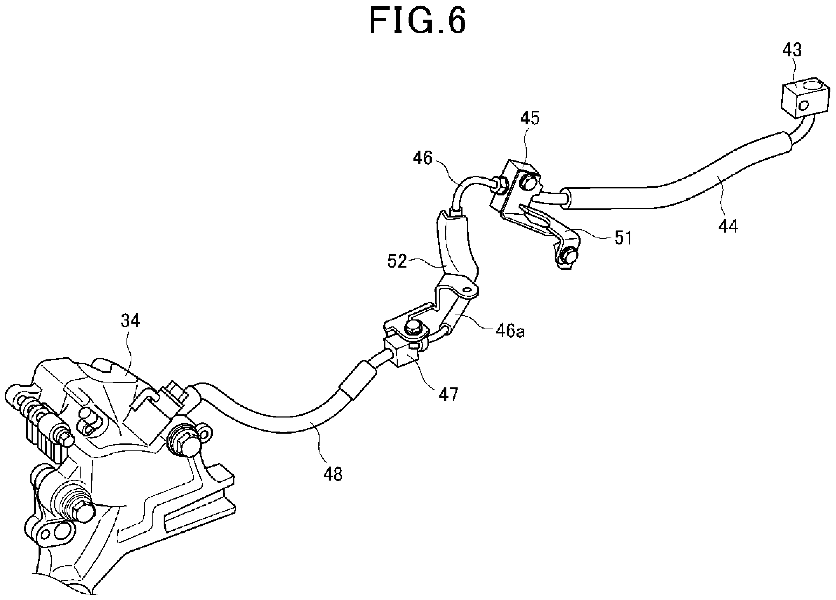

FIG. 3 is a a view from above with a partly cross section, illustrating a suspension mount portion of the swing arm 12. FIG. 4 is a fragmentary perspective view, partly cross section, illustrating the shape of an upper surface of the swing arm 12. FIG. 5 is a fragmentary perspective view illustrating the layout of the brake hose 40 on a bent portion of the swing arm 12. FIG. 6 is a perspective view illustrating the connected configuration of the brake hose 40.

As illustrated in FIGS. 3 and 6, the brake hose 40 includes the hose 41 connected to the master cylinder 35, a first joint 43, a front hose 44, a second joint 45, a pipe 46, a third joint 47, and a rear hose 48.

The hose 41, the front hose 44, and the rear hose 48 are pressure-resistant rubber hoses. The first joint 43 and the second joint 45 are metal members.

The hose 41 interconnects the master cylinder 35 and the first joint 43 that is mounted on the right main frame 18 above a pair of left and right front pivot portions 12c of the swing arm 12.

The front hose 44 has a front end connected to the first joint 43 and extends rearwardly with respect to the motorcycle 1. The front hose 44 has a rear end connected to the second joint 45.

The pipe 46 in the form of a metal pipe has a front end connected to the second joint 45 and a rear end connected to the third joint 47. The pipe 46, which may be a steel pipe or the like, has an outside diameter smaller than the pressure-resistant rubber hoses that have a pressure-resistant capability equivalent to the pipe 46. The pipe 46 can have an allowable bending radius smaller than the pressure-resistant rubber hoses.

The rear hose 48 has a front end connected to the third joint 47 and a rear end connected to the brake caliper 34.

The master cylinder 35 is thus connected to the brake caliper 34 by the brake hose 40, so that the brake caliper 34 can be hydraulically operated when the master cylinder 35 is operated by the brake pedal 33.

If the motorcycle 1 incorporates an anti-lock brake system, then the anti-lock brake system has a valve unit, not depicted, and a power module, not depicted, that are connected to the first joint 43. The anti-lock brake system controls braking forces generated by the brake caliper 34 depending on the vehicle speed detected by a vehicle speed sensor, not depicted, on the motorcycle 1. When the brake pedal 33 is abruptly operated, the anti-lock brake system is effective to prevent the rear wheel 3 from being locked, thereby keeping the motorcycle 1 stable in its direction of travel.

The front pivot portions 12c of the swing arm 12 are pivotally connected to the respective pivot frames 23 by the pivot shaft 26.

Specifically, the left and right front pivot portions 12c are disposed in left and right positions on the motorcycle 1 and have respective rear portions connected to an intermediate portion 12b.

The intermediate portion 12b joins the left and right front pivot portions 12c to each other, and has a pair of left and right suspension supports 12g centrally on a rear portion thereof. The suspension 27 has a lower end 27a swingably supported between the left and right suspension supports 12g.

The swing arm 12 has a pair of left and right arm bodies 12a having respective front ends connected to left and right sides of the rear portion of the intermediate portion 12b. The rear wheel 3 is rotatably supported between respective rear end portions of the left and right arm bodies 12a.

As illustrated in FIGS. 3 and 4, the swing arm 12 has on an upper surface thereof a side wall 12e of the motorcycle 1 that extends from the right pivot portion 12c to the intermediate portion 12b. The side wall 12e increases the vertical effective cross-sectional area of a rear portion of the pivot portion 12c, thereby increasing the vertical flexural rigidity of the swing arm 12.

As illustrated in FIG. 3, the junction between the intermediate portion 12b and the right arm body 12a has a bent portion 12d on a side thereof which faces the rear wheel 3, i.e., on an inner side extending transversely of the motorcycle 1. The bent portion 12d has an arcuate surface that is recessed obliquely rightwardly and forwardly, smoothly joining a rear surface of the intermediate portion 12b and a left side surface of the right arm body 12a a view from above.

As illustrated in FIGS. 2 and 3, the inner fender 31 is mounted on an upper surface of the swing arm 12 and covers a front upper portion of the rear wheel 3. The inner fender 31 is in the form of a plate extending obliquely rearwardly and upwardly and has a transversely central portion protruding upwardly.

The inner fender 31 includes a forward extension 31a on a right side thereof, extending forwardly over the intermediate portion 12b of the swing arm 12. The forward extension 31a extends along the direction in which the side wall 12e of the swing arm 12 extends. The inner fender 31 is disposed such that a front portion of the forward extension 31a overlaps part of a rear portion of the side wall 12e.

The inner fender 31 includes a central arcuate portion 31b that protrudes forwardly and extends along part of an outer circumferential surface of the rear wheel 3. The arcuate portion 31b has a distal end substantially aligned with a rear surface of the intermediate portion 12b in a view from above.

A recess 31c is defined between the forward extension 31a and the arcuate portion 31b.

A gap 50 is defined between the rear surface of the intermediate portion 12b and the recess 31c in the inner fender 31 in a view from above. The pipe 46 of the brake hose 40 extends rearwardly through the gap 50.

The first joint 43 of the brake hose 40 is mounted on the right main frame 18 above the right pivot portion 12c of the swing arm 12. The front hose 44 extends from an upper surface of the right pivot portion 12c along a left side of the side wall 12e and is disposed inwardly of left and right outer side surfaces of the swing arm 12.

The second joint 45 is disposed on an upper surface of the rear portion of the intermediate portion 12b of the swing arm 12. The second joint 45 is disposed between the suspension 27 and the forward extension 31a of the inner fender 31 as viewed in plan.

The second joint 45 is fixed to an upper portion of a right side surface of the intermediate portion 12b by a stay 51. As illustrated in FIG. 2, the second joint 45 is disposed so as not overlap an adjustment ring 27b that is a maximum-diameter portion of the suspension 27 as viewed in side elevation. In other words, the second joint 45 is offset rearwardly from the adjustment ring 27b.

The second joint 45 is disposed such that a portion of the second joint 45 overlaps the forward extension 31a as viewed in side elevation.

The stay 51 by which the second joint 45 is fixed to the intermediate portion 12b extends leftwardly from the upper portion of the right side surface of the intermediate portion 12b, and extends below the forward extension 31a over an upper surface of the swing arm 12. The stay 51 thus allows the second joint 45 to be disposed leftwardly of the forward extension 31a.

The front hose 44 that interconnects the first joint 43 and the second joint 45 extends longitudinally along a left side surface 12f of the side wall 12e. The front hose 44 lies between the forward extension 31a and the suspension 27, and includes a portion overlapping the forward extension 31a as viewed in side elevation.

The pipe 46 is connected to the second joint 45. As illustrated in FIG. 5, the pipe 46 extends from the upper surface of the rear portion of the intermediate portion 12b downwardly through the gap 50 between the inner fender 31 and the rear surface of the intermediate portion 12b. The pipe 46 then extends from the upper surface of the rear portion of the intermediate portion 12b rearwardly along the bent portion 12d.

The pipe 46 that extends along the bent portion 12d is protected by a cover stay 52 that is disposed between the rear wheel 3 and the bent portion 12d of the swing arm 12. The cover stay 52 is shaped along the bent portion 12d.

The portion of the pipe 46 that extends along the bent portion 12d has an upper surface and a portion facing a tread 3b of the rear wheel 3, covered with the cover stay 52.

A cover tube 46a is mounted on the length of the pipe 46 that is covered with the cover stay 52, keeping the pipe 46 out of contact with the cover stay 52.

The cover stay 52 has an upper end portion 52a extending upwardly and projecting beyond the upper surface of the intermediate portion 12b. The cover stay 52 is of such a shape that it includes a portion beneath the upper end portion 52a, extending rearwardly along the bent portion 12d of the swing arm 12. The cover stay 52 may be made of a metal sheet pressed to shape.

The cover stay 52 and the inner fender 31 are fixed to an upper surface of the swing arm 12 by a bolt 55. The cover stay 52 has a rear end portion also fixed to the upper surface of the swing arm 12 by a bolt 54.

The third joint 47 is also fixed to the swing arm 12 at the rear end portion of the cover stay 52. Specifically, the third joint 47 is fixed to a left side surface, which faces the rear wheel 3, of the right arm body 12a of the swing arm 12.

The pipe 46 that extends between the cover stay 52 and the bent portion 12d is connected to the third joint 47.

The front end of the rear hose 48 is connected to the third joint 47. The rear hose 48 extends rearwardly along the left side surface of the right arm body 12a of the swing arm 12. The rear end of the rear hose 48 is connected to the brake caliper 34.

A cable 60 from the vehicle speed sensor, not depicted, of the anti-lock brake system may extend from the first joint 43 of the brake hose 40 along the rear hose 48. The vehicle speed sensor is disposed in the vicinity of the brake caliper 34 for detecting the rotational speed of the rear wheel 3. The anti-lock brake system is connected to the brake caliper 34 through the brake hose 40. As the cable 60 extends along the brake hose 40, the cable 60 achieves the same advantages as those achieved by the brake hose 40 that extends as described above.

Operation and advantages of the rear brake hose layout structure will be described below.

Since the inner fender 31 is mounted on the upper surface of the swing arm 12, the front upper portion of the rear wheel 3 is covered with the inner fender 31. The upper surface of the swing arm 12 that extends from the pivot portions 12c to the intermediate portion 12b is disposed behind the inner fender 31 away from the tread 3b of the rear wheel 3. Therefore, the upper surface of the swing arm 12 that extends from the pivot portions 12c to the intermediate portion 12b is protected by the inner fender 31 from pebbles that are caused to jump off the ground by the rear wheel 3.

Furthermore, since the brake hose 40 extends over the upper surface of the swing arm 12 that extends from the pivot portions 12c to the intermediate portion 12b, the brake hose 40 is also protected by the inner fender 31 from pebbles that are caused to jump off the ground by the rear wheel 3.

The hose 41 of the brake hose 40 that is connected to the master cylinder 35 extends over the right pivot portion 12c and is connected to the first joint 43 that is mounted on the right main frame 18. Since the master cylinder 35 and the first joint 43 are mounted on the right main frame 18, no excessive load will be applied to the hose 41 irrespectively of how much the swing arm 12 swings.

The first joint 43 and the second joint 45 that is mounted on the intermediate portion 12b of the swing arm 12 are interconnected by the front hose 44.

When the motorcycle 1 travels, the swing arm 12 swings with respect to the main frames 18. The front hose 44 interconnects the first joint 43 and the second joint 45 while sagging slightly in itself. Therefore, even when the swing arm 12 swings, no extra force is imposed on the front hose 44.

As the front hose 44 is disposed inwardly of the side wall 12e of the swing arm 12, the front hose 44 tends to contact the side wall 12e of the swing arm 12 even when the front hose 44 moves unexpectedly. Accordingly, the range in which the front hose 44 moves unexpectedly is minimized.

Since the front hose 44 extends over the swing arm 12 between the suspension 27 and the forward extension 31a of the inner fender 31, the front hose 44 interconnects the first joint 43 and the second joint 45 over a short distance.

In a side elevation of the motorcycle 1, the forward extension 31a of the inner fender 31 overlaps the front hose 44. Therefore, a portion of the front hose 44 is concealed from view by the inner fender 31. Certain complex structural details of the brake hose 40 are thus less liable to be seen sideways, resulting in an improvement of the design properties of the appearance of the motorcycle 1. In addition, the front hose 44 is less susceptible to physical contact with obstacles.

Furthermore, as the second joint 45 is concealed from view by the inner fender 31, certain complex structural details of the hydraulic piping are thus less liable to be seen sideways.

The second joint 45 is offset from the adjustment ring 27b that is a maximum-diameter portion of the suspension 27. Therefore, the suspension 27 and the second joint 45 are kept out of physical interference with each other.

Inasmuch as the second joint 45 and the third joint 47 are interconnected by the pipe 46, the second joint 45 and the third joint 47 are interconnected by a pipe that is smaller in diameter than the pressure-resistant rubber hoses. Therefore, a large clearance is available between the pipe 46 and the rear surface of the swing arm 12 and also between the pipe 46 and the recess 31c in the inner fender 31.

The pipe 46 can have a smaller allowable bending radius than the pressure-resistant rubber hoses. The smaller allowable bending radius of the pipe 46 is advantageous when the pipe 46 is bent and laid in position. The pipe 46 can thus be placed along a short path over the surface of the swing arm 12.

Since the pipe 46 is covered with the cover stay 52, the pipe 46 is protected by the cover stay 52 from pebbles that are caused to jump off the ground toward the pipe 46 by the rear wheel 3 as it rotates.

The pipe 46 is disposed along the bent portion 12d of the swing arm 12. The pipe 46 can thus be placed along the surface of the swing arm 12 that faces the rear wheel 3 without being unduly bent. Therefore, the pipe 46 can be placed closely to the bent portion 12d, leaving a large interval between the rear wheel 3 and the pipe 46.

According to the embodiment of the present invention, as described above, the inner fender 31 includes the forward extension 31a that covers at least a portion of the upper surface of the intermediate portion 12b of the swing arm 12, and the forward extension 31a overlaps the brake hose 40 as viewed in side elevation. Consequently, the inner fender 31 makes complex structural details of the brake hose 40 less visible sideways, resulting in an improvement of the design properties of the appearance of the motorcycle 1.

The lower end 27a of the suspension 27 is connected to the suspension supports 12g disposed centrally on the rear portion of the intermediate portion 12b of the swing arm 12. The intermediate portion 12b has on a side thereof the side wall 12e that is a linear protruding portion extending longitudinally of the motorcycle 1. The brake hose 40 lies between the suspension 27 and the side wall 12e. Therefore, complex structural details of the brake hose 40 are less visible sideways, resulting in an improvement of the design properties of the appearance of the motorcycle 1. In addition, the side wall 12e restricts the front hose 44 from moving, minimizing unexpected movement of the front hose 44.

The inner fender 31 has the recess 31c, defining the gap 50 that does not overlap the swing arm 12 as viewed in plan, behind the intermediate portion 12b of the swing arm 12. The brake hose 40 extends through the gap 50 and is disposed inwardly of the right arm body 12a of the swing arm 12. The brake hose 40 and the inner fender 31 are thus less liable to physically interfere with each other. As the brake hose 40 does not need to be placed around the inner fender 31, the overall length of the brake hose 40 is reduced.

The swing arm 12 has the bent portion 12d on the junction, facing the rear wheel 3, between the intermediate portion 12b and the right arm body 12a of the swing arm 12, and the inner fender 31 is disposed above and covers the portion of the brake hose 40 that extends along the bent portion j12d. Accordingly, complex structural details of the brake hose 40 are less visible from above, resulting in an improvement of the design properties of the appearance of the motorcycle 1.

A portion of the brake hose 40 that is disposed along the bent portion 12d includes at least a portion constructed as the pipe 46 made of metal, and the brake hose 40 includes a combination of the metal pipe 46, the hose 41, the front hose 44, and the rear hose 48. Therefore, the brake hose 40 can be laid in position with increased freedom. The pipe 40 can be smaller in diameter than the other hose components of the brake hose 40. The pipe 46 can thus be placed with clearances in regions where large clearances are not available. As the pipe 46 is smaller in diameter, its allowable bending radius can be reduced, resulting in an increase in the freedom with which to lay the brake hose 40 in position.

The cover stay 52 as a protective member is disposed between the portion of the brake hose 40 that is disposed along the bent portion 12d of the swing arm 12 and the rear wheel 3. The brake hose 40 is thus protected by the cover stay 52 while achieving an improvement of the design properties of the appearance of the motorcycle 1. The metal pipe 46 that is disposed along the bent portion 12d is protected, resulting in an increase in the durability of the brake hose 40.

The brake hose 40 includes the second joint 45 that interconnects the front hose 44 and the metal pipe 46. The second joint 45 is offset rearwardly from the adjustment ring 27b that is a maximum-diameter portion of the suspension 27. The brake hose 40 is less likely to physically interfere with the suspension 27. The brake hose 40 is thus made less visible from outside of the motorcycle 1, while avoiding physical interference between the brake hose 40 and the suspension 27. The design properties of the appearance of the motorcycle 1 are thus improved.

### [Object]

To provide a rear brake hose layout structure that protects a brake hose on a saddle riding vehicle and improves the appearance of the vehicle.

### [Description of Reference Symbols]

- 3: Rear wheel
- 3b: Tread
- 12: Swing arm
- 12a: Arm body
- 12b: Intermediate portion
- 12d: Bent portion
- 12e: Side wall
- 27: Suspension
- 27b: Adjustment ring
- 31: Inner fender
- 31a: Forward extension
- 31b: Arcuate portion
- 31c: Recess
- 40: Brake hose
- 41: Hose
- 42: Reservoir hose
- 43: First joint
- 44: Front hose
- 45: Second joint
- 46: Pipe
- 46a: Cover tube
- 47: Third joint
- 48: Rear hose
- 50: Gap
- 51: Stay
- 52: Cover stay
- 52a: Upper end portion

## Claims

1. A rear brake hose layout structure for a saddle riding vehicle, comprising:
a swing arm (12) including an arm body (12a), a pivot portion (12c), and an intermediate portion (12b) that interconnects the arm body (12a) and the pivot portion (12c);
a brake hose (40) having at least a portion disposed on an upper surface of the swing arm (12); and
an inner fender (31) mounted on the swing arm (12) and covering the swing arm (12) and a rear wheel (3) from above,
the inner fender (31) having a forward extension (31a) covering at least a portion of an upper surface of the intermediate portion (12b) of the swing arm (12) and the inner fender (31) having an central arcuate portion (31b) that protrudes forwardly and extends along part of an outer circumferential surface of the rear wheel (3) with a distal end substantially aligned with a rear surface of the intermediate portion (12b) in a view from above,
**characterized in that**
the forward extension (31a) overlaps the brake hose (40) as viewed from a side of the vehicle, the inner fender (31) has a recess (31c) defined between the forward extension (31a) and the arcuate portion (31b), a gap (50) which does not overlap the swing arm (12) in a view from above is defined rearwardly of the intermediate portion (12b) of the swing arm (12).
the gap (50) is defined between a rear surface of the intermediate portion (12b) and the recess (31c) in the inner fender (31) in a view from above, and
the brake hose (40) extends through the gap (50) and is disposed inwardly of the arm body (12a) of the swing arm (12).

2. The rear brake hose layout structure for a saddle riding vehicle according to claim 1, further comprising:
a suspension (27) having a lower end (27a) connected to a central rear portion (12f) of the intermediate portion (12b) of the swing arm (12),
wherein the swing arm (12) includes a side wall (12e) disposed on a side of the intermediate portion (12b) and extending upwardly, and
the brake hose (40) lies between the suspension (27) and the side wall (12e).

3. The rear brake hose layout structure for a saddle riding vehicle according to claim 1 or 2, wherein the swing arm (12) has a bent portion (12d) on a junction, which faces the rear wheel (3), between the intermediate portion (12b) and the arm body (12a), and the inner fender (31) is disposed above and covers a portion of the brake hose (40) that is disposed along the bent portion (12d).

4. The rear brake hose layout structure for a saddle riding vehicle according to any one of claims 1 to 3, wherein the portion of the brake hose (40) that is disposed along the bent portion (12d) includes at least a portion constructed as a metal pipe (46), and the brake hose (40) includes a combination of the metal pipe (46) and a hose (41, 44, 48).

5. The rear brake hose layout structure for a saddle riding vehicle according to any one of claims 1 to 3, further comprising:
a protective member (52) disposed between the portion of the brake hose (40) that is disposed along the bent portion (12d) and the rear wheel (3).

6. The rear brake hose layout structure for a saddle riding vehicle according to any one of claims 1 claims 1 to 5, wherein the brake hose (40) has a joint (45) interconnecting the hose (41, 44, 48) and the metal pipe (46), and
the joint (45) is offset rearwardly from a maximum-diameter portion (27b) of the suspension (27).

## Patentansprüche

1. Hintere Bremsschlauch-Layoutstruktur für ein Sattelaufsitzfahrzeug, welche aufweist:
einen Schwingarm (12), der einen Armkörper (12a), einen Anlenkabschnitt (12c) und einen Zwischenabschnitt (12b), der den Armkörper (12a) mit dem Lenkabschnitt (12c) verbindet, enthält;
einen Bremsschlauch (40) mit zumindest einem Abschnitt, der auf einer Oberseite des Schwingarms (12) angeordnet ist; und
einen inneren Fender (31), der an dem Schwingarm (12) angebracht ist und den Schwingarm (12) und ein Hinterrad (3) von oben her bedeckt,
wobei der innere Fender (31) eine vordere Verlängerung (31a) aufweist, die zumindest einen Abschnitt einer Oberseite des Zwischenabschnitts (12b) des Schwingarms (12) bedeckt, und der innere Fender (31) einen mittigen bogenförmigen Abschnitt (31b) aufweist, der nach vorne vorsteht und sich entlang einem Teil einer Außenumfangsfläche des Hinterrads (3) erstreckt, mit einem distalen Ende, das, bei Betrachtung von oben, mit einer Rückseite des Zwischenabschnitts (12b) im Wesentlichen fluchtet,
**dadurch gekennzeichnet, dass**
bei Betrachtung von einer Seite des Fahrzeugs her, die vordere Verlängerung (31a) den Bremsschlauch (40) überlappt, der innere Fender (31) eine Vertiefung (31c) aufweist, die zwischen der vorderen Verlängerung (31a) und dem bogenförmigen Abschnitt (31b) definiert ist, eine Lücke (50), die bei Betrachtung von oben den Schwingarm (12) nicht überlappt, hinter dem Zwischenabschnitt (12b) des Schwingarms (12) definiert ist,
wobei die Lücke (50), bei Betrachtung von oben, zwischen einer Rückseite des Zwischenabschnitts (12b) und der Vertiefung (31c) in dem inneren Fender (31) definiert ist, und
sich der Bremsschlauch (40) durch die Lücke (50) erstreckt und einwärts des Armkörpers (12a) des Schwingarms (12) angeordnet ist.

2. Die hintere Bremsschlauch-Layoutstruktur für ein Sattelaufsitzfahrzeug nach Anspruch 1, die ferner aufweist:
eine Aufhängung (27), deren unteres Ende (27a) mit einem mittigen hinteren Abschnitt (12f) des Zwischenabschnitts (12b) des Schwingarms (12) verbunden ist,
wobei der Schwingarm (12) eine Seitenwand (12e) enthält, die an einer Seite des Zwischenabschnitts (12b) angeordnet ist und sich nach oben erstreckt, und
der Bremsschlauch (40) zwischen der Aufhängung (27) und der Seitenwand (12e) liegt.

3. Die hintere Bremsschlauch-Layoutstruktur für ein Sattelaufsitzfahrzeug nach 1 oder 2, wobei an einem zum Hinterrad (3) weisenden Übergang zwischen dem Zwischenabschnitt (12b) und dem Armkörper (12a) der Schwingarm (12) einen gebogenen Abschnitt (12d) hat, und
der innere Fender (31) über einem Abschnitt des Bremsschlauchs (40), der entlang dem gebogenen Abschnitt (12d) angeordnet ist, angeordnet ist und diesen bedeckt.

4. Die hintere Bremsschlauch-Layoutstruktur für ein Sattelaufsitzfahrzeug nach einem der Ansprüche 1 bis 3, wobei der Abschnitt des Bremsschlauchs (40), der entlang dem gebogenen Abschnitt (12d) angeordnet ist, zumindest einen Abschnitt enthält, der als Metallrohr (46) aufgebaut ist, und
der Bremsschlauch (40) eine Kombination des Metallrohrs (46) und eines Schlauchs (41, 44, 48) enthält.

5. Die hintere Bremsschlauch-Layoutstruktur für ein Sattelaufsitzfahrzeug nach einem der Ansprüche 1 bis 3, die ferner aufweist:
eine Schutzelement (52), das zwischen dem Abschnitt des Bremsschlauchs (40), der entlang dem gebogenen Abschnitt (12d) angeordnet ist, und dem Hinterrad (3) angeordnet ist.

6. Die hintere Bremsschlauch-Layoutstruktur für ein Sattelaufsitzfahrzeug nach einem der Ansprüche 1 bis 5, wobei der Bremsschlauch (40) eine Kupplung (45) aufweist, die den Schlauch (41, 44, 48) mit dem Metallrohr (46) verbindet, und
die Kupplung (45) von einem Abschnitt maximalen Durchmessers (27b) der Aufhängung (27) nach hinten versetzt ist.

## Revendications

1. Structure d'agencement de tuyau de frein arrière pour véhicule à enfourcher, comprenant :
un bras oscillant (12) incluant un corps de bras (12a), une portion de pivotement (12c), et une portion intermédiaire (12b) qui relie le corps de bras (12a) et la portion de pivotement (12c) ;
un tuyau de frein (40) ayant au moins une portion disposée sur une surface supérieure du bras oscillant (12) ; et
un garde-boue intérieur (31) monté sur le bras oscillant (12) et recouvrant le bras oscillant (12) et une roue arrière (3) par le dessus, le garde-boue intérieur (31) ayant une extension vers l'avant (31a) recouvrant au moins une portion d'une surface supérieure de la portion intermédiaire (12b) du bras oscillant (12), et le garde-boue intérieur (31) ayant une portion arquée centrale (31b) faisant saillie vers l'avant et s'étendant le long d'une partie d'une surface circonférentielle extérieure de la roue arrière (3) avec une extrémité distale sensiblement alignée avec une surface arrière de la portion intermédiaire (12b) en vue du dessus,
**caractérisée en ce que**
l'extension vers l'avant (31a) chevauche le tuyau de frein (40) en vue depuis un côté du véhicule,
le garde-boue intérieur (31) a un évidement (31c) défini entre l'extension vers l'avant (31a) et la portion arquée (31b),
un espacement (50) qui ne chevauche pas le bras oscillant (12) en vue du dessus est défini vers l'arrière de la portion intermédiaire (12b) du bras oscillant (12),
l'espacement (50) est défini entre une surface arrière de la portion intermédiaire (12b) et l'évidement (31c) dans le garde-boue intérieur (31) en vue du dessus, et
le tuyau de frein (40) s'étend à travers l'espacement (50) et est disposé vers l'intérieur du corps de bras (12a) du bras oscillant (12).

2. Structure d'agencement de tuyau de frein arrière pour véhicule à enfourcher selon la revendication 1, comprenant en outre :
une suspension (27) ayant une extrémité inférieure (27a) raccordée à une portion arrière centrale (12f) de la portion intermédiaire (12b) du bras oscillant (12),
dans laquelle le bras oscillant (12) inclut une paroi latérale (12e) disposée sur un côté de la portion intermédiaire (12b) et s'étendant vers le haut, et
le tuyau de frein (40) se trouve entre la suspension (27) et la paroi latérale (12e).

3. Structure d'agencement de tuyau de frein arrière pour véhicule à enfourcher selon la revendication 1 ou 2, dans laquelle le bras oscillant (12) a une portion pliée (12d) sur une jonction, qui fait face à la roue arrière (3), entre la portion intermédiaire (12b) et le corps de bras (12a), et
le garde-boue intérieur (31) est disposé au-dessus et recouvre une portion du tuyau de frein (40) qui est disposée le long de la portion pliée (12d).

4. Structure d'agencement de tuyau de frein arrière pour véhicule à enfourcher selon l'une quelconque des revendications 1 à 3, dans laquelle la portion du tuyau de frein (40) qui est disposée le long de la portion pliée (12d) inclut au moins une portion construite en tant qu'un conduit métallique (46), et
le tuyau de frein (40) inclut une combinaison du conduit métallique (46) et d'un tuyau (41, 44, 48).

5. Structure d'agencement de tuyau de frein arrière pour véhicule à enfourcher selon l'une quelconque des revendications 1 à 3, comprenant en outre :
un organe de protection (52) disposé entre la portion du tuyau de frein (40) qui est disposée le long de la portion pliée (12d) et la roue arrière (3).

6. Structure d'agencement de tuyau de frein arrière pour véhicule à enfourcher selon l'une quelconque des revendications 1 à 5, dans laquelle le tuyau de frein (40) a une jointure (45) reliant le tuyau (41, 44, 48) et le conduit métallique (46), et
la jointure (45) est décalée vers l'arrière depuis une portion de diamètre maximal (27b) de la suspension (27).
